**Europäisches Patentamt**

**European Patent Office**

**Office européen des brevets**

(11) Veröffentlichungsnummer: **0 273 217**
**A1**

# (12) EUROPÄISCHE PATENTANMELDUNG

(21) Anmeldenummer: **87117716.8**

(22) Anmeldetag: **30.11.87**

(51) Int. Cl.⁴: **B25J 19/06**

(30) Priorität: **09.12.86 DE 3641920**

(43) Veröffentlichungstag der Anmeldung:
**06.07.88 Patentblatt 88/27**

(84) Benannte Vertragsstaaten:
**CH DE FR GB IT LI SE**

(71) Anmelder: **Siemens Aktiengesellschaft Berlin und München**
**Wittelsbacherplatz 2**
**D-8000 München 2(DE)**

(72) Erfinder: **Berner, Klaus, Dipl.-Ing.**
**Bachstrasse 15**
**D-6838 Reilingen(DE)**

(54) **Sicherungskupplung für einen Roboter.**

(57) Die Kupplung (1) dient dem Überlastungsschutz gegen Druckkräfte and Kippmomente. Sie soll kostengünstig herstllbar sein und bei geringem Gewicht eine einfache kompakte Struktur aufweisen.

Die Kupplung (1) weist einen topfartigen Zylinder (2) auf, in dem ein scheibenförmiger Kolben (3) geführt ist und durch Druckfedern (7) gegen einen umlaufenden Wulst (8) des Zylinders (2) gedrückt ist.

Befestigung von Greifern an Handhabungsrobotern.

FIG 1a

FIG 1b

EP 0 273 217 A1

## Sicherheitskupplung für einen Roboter

Die Erfindung bezieht sich auf eine Kupplung zum Befestigen eines Werkzeuges an eine Betätigungsarm eines Handhabungsroboters, wobei die Kupplung gegen Überlastung durch Druckkräfte und Kippmomente aus zwei axial federnd gegeneinander verspannten Kupplungsteilen besteht.

Eine derartige Kupplung ist z. B. durch die DE-OS 32 41 132 bekannt geworden. Danach sind die beiden Kupplungsteile zum einen fest mit dem Roboterarm und zum anderen mit dem Werkzeug oder dem Werkzeughalter verbunden. Zwischen den beiden Kupplungsteilen ist eine Axialdruckfeder eingespannt, die mittels Haltebolzen zusammengehalten sind. Beim Auftreten eines Kippmomentes, das über die Wirkung der Federvorspannung hinausgeht, wird die Feder einseitig zusammengedrückt, so daß die Werkzeugachse gegenüber der Achse des Roboterarms abgeknickt werden kann. Dabei entfernt sich ein am einen Kupplungsteil befestigtes Dektektorstück von einem induktiven Näherungsschalter, der im anderen Kupplungsteil koaxial angeordnet ist. Dieser erzeugt daraufhin ein Abschaltsignal für die Robotersteuerung. Die Haltebolzen greifen in koaxiale Bohrungen des anderen Kupplungsteiles ein und sind gegenüber diesem schwenkbar. Zumindest einer der Haltebolzen weist einen kugelförmig verdickten Kopf auf, der in der entsprechenden Bohrung spielfrei und verdrehsichernd geführt ist.

Der Erfindung liegt die Aufgabe zugrunde, die Sicherheitskupplung kompakt und einfach auszubilden und den Herstellungsaufwand dafür zu verringern.

Diese Aufgabe wird durch die Erfindung gemäß Anspruch 1 gelöst. Die Anschlagfläche kann z. B. als nach innen vorstehender umlaufender Wulst ausgebildet sein, an dem der Kolben anliegt. Die beiden Kupplungsteile sind nun unmittelbar ineinander ge führt, so daß die Haltebolzen entfallen, wodurch sich die Kuppplung konstruktiv erheblich vereinfacht. Aufgrund des großen Umfanges der Führungsfläche kann diese sehr schmal und damit der Kolben sehr flach gehalten werden. Dies verringert die Bauhöhe und das Gewicht der Kupplung. Der radiale stiftartige Vorsprung kann z. B. als Zylinderstift ausgebildet sein, der in den Kolben eingepreßt ist. Der axiale Führungsschlitz kann in einfacher Weise dem Durchmesser des Zylinderstiftes sehr genau angepaßt werden. Der Zylinderstift verhindert daher in jeder Winkellage des Kolbens ein Verdrehen gegenüber dem Zylinder. Da die Führungsfläche des Kolbens sehr schmal ist, kommt es auch bei starker Auslenkung zu keinem Verklemmen mit dem Zylinder. Zwischen dem Zylinderboden und dem Kolben gespannte Druckfedern ermöglichen eine sichere Rückstellung des Kolbens nach dem Auslenken. Da der umlaufende Auflagerand des Zylinders eine einzige Anschlagfläche für eine entsprechende Auflagefläche des Kolbens bildet, wird eine hohe Genauigkeit in der Normallage der beiden Teile zueinander erzielt.

Vorteilhafte Weiterbildungen der Erfindung sind in den Ansprüchen 2 bis 6 gekennzeichnet:

Die Weiterbildungen nach den Ansprüchen 2 und 3 ermöglichen eine genaue Führung des Kolbens im Zylinder auch bei sehr großen Auslenkwinkeln, ohne daß es dabei zu einem Verkannten der beiden Teile kommt.

Die Weiterbildung nach Anspruch 4 ermöglicht ein Einstellen des Detektorstücks auf unterschiedliche Auslenkstellungen. Bei der Weiterbildung nach Anspruch 5 wird der Detektor in dem Moment betätigt, in dem der Stufenübergang erfolgt. Dieser scharfe Übergang ergibt eine geringe Streubreite bei der Auswertung des Signals. Die radiale Tastrichtung ermöglicht es, den Detektor flachliegend in den Zylinder einzubauen, so daß sich die Bauhöhe der Kupplung noch weiter verringert.

Der berührungsfrei arbeitende Näherungsschalter nach Anspruch 6 ist stabförmig ausgebildet und steht senkrecht zur Kupplungsachse. Eine derartige Detektoranordnung ermöglicht eine langgruppige Verstellung des Detektorstücks. Dieses kann mittels des verstellbaren Anschlages auf unterschiedliche Schwenkwinkel eingestellt werden, bei denen der Detektorschwellwert erreicht wird.

Im folgenden wird die Erfindung anhand eines in der Zeichnung dargestellten Ausführungsbeispieles näher erläutert.

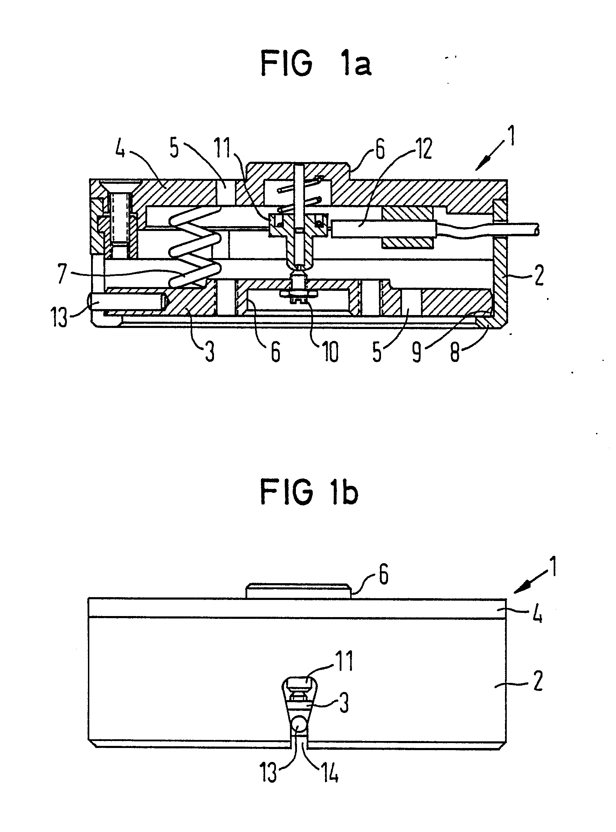

Die beiden Figuren 1a und 1b zeigen in einer axialen Schnittdarstellung und einer Seitenansicht eine Kupplung 1 zum Befestigen eines Werkzeuges bzw. Greifers an einem Betätigungsarm eines Handhabungsroboters. Die Kupplung 1 besteht im wesentlichen aus einem topfartigen Zylinder 2 und einem flachen Kolben 3, der spielfrei im Zylinder geführt ist. Der Kolben 3 und ein Boden 4 des Zylinders sind mit Befestigungslöchern 5 und Zentrieransätzen 6 für das Werkzeug bzw. den Roboterarm versehen. Zwischen dem Boden 4 und dem Kolben 3 sind Druckfedern 7 gespannt, die den Kolben 3 gegen einen nach innen vorstehenden umlaufenden Wulst 8 des Zylinders 2 drücken. Dieser bildet eine ringförmige Anschlagfläche für den Kolben 3.

Der Kolben 3 weist eine ballige Mantelfläche 9 auf, durch die ein Verkanten vermieden wird, wenn der Kolben 3 gegenüber dem Zylinder 2 durch einen Kippmoment ausgelenkt wird. In den Kolben 3 ist eine verstellbare Anschlagschraube 10 für ein axial am Zylinder 2 verschiebbares Detektorstück 11 vorgesehen. Die ballige Anschlagfläche der Anschlagschraube 10 steht nur geringfügig aus dem Kolben hervor, so daß der Anschlagpunkt dem Kolbenmittelpunkt eng benachbart ist. Das federnd gegen die Anschlagschraube 10 gedrückte Detektorstück weist eine stufenförmig abgesetzte seitliche Kontur auf. Ein induktiver Näherungsschalter 12 ist auf das Detektorstück 11 gerichtet. Wird der Kolben 3 gegenüber dem Zylinder 2 gekippt, so verschiebt sich das Detektorstück 11 in Richtung des Bodens 4. Beim Vorbeigleiten des stufenförmigen Absatzes am Näherungsschalter 12 ändert dieser seinen elektrischen Status und zeigt damit der Robotersteuerung die Überschreitung eines eingestellten Kippwinkels an.

In den Kolben 3 ist radial ein Zylinderstift 13 eingesetzt, der in einen koaxialen Führungsschlitz 14 in der Außenwand des Zylinders 2 spielfrei hineinragt. Der Zylinderstift 13 verhindert damit ein Verdrehen der beiden Kupplungsteile gegeneinander, ohne die Kippbewegung zu beeinträchtigen.

**Ansprüche**

1. Kupplung (1) zum Befestigen eines Werkzeuges an einem Betätigungsarm eines Handhabungsroboters, wobei die Kupplung (1) gegen Überlastung durch Druckkräfte und Kippmomente aus zwei axial federnd gegeneinander verspannten Kupplungsteilen (2,3) besteht, **dadurch gekennzeichnet,** daß ein erstes der beiden Kupplungsteile als topfartiger Zylinder (2) und ein zweites als - scheibenartiger, im Zylinder geführter Kolben (3) ausgebildet ist, daß an der Zylinderwand zumindest eine Anschlagfläche (z. B. 8) für den Kolben (3) vorgesehen ist und daß der Kolben (3) zumindest einen radialen stiftartigen Vorsprung (z. B. 13) aufweist, der in einen koaxialen Führungsschlitz (14) des Zylinders (2) eingreift.

2. Kupplung nach Anspruch 1, **dadurch gekennzeichnet,** daß der Kolben (3) eine schmale verrundete Mantelfläche (9) aufweist.

3. Kupplung nach Anspruch 2, **dadurch gekennzeichnet,** daß die Mantelfläche (9) teilkugelförmig ausgebildet ist.

4. Kupplung nach Anspruch 1, 2 oder 3, **dadurch gekennzeichnet,** daß im Kolbenzentrum ein axial verstellbarer, geringfügig überstehender Anschlag (z. B. 10) für einen am Zylinder (2) axial federnd verschiebbares Detektorstück (11) für einen Wegdetektor (z. B. 12) vorgesehen ist.

5. Kupplung nach Anspruch 4, **dadurch gekennzeichnet,** daß das Detektorstück (11) im Bereich des Wegdetektors (z. B. 12) eine stufenförmig abgesetzte Kontur aufweist und daß die Schaltrichtung des Wegdetektors (z. B. 12) senkrecht zur Bewegungsrichtung des Detektorstücks (11) angeordnet ist.

6. Kupplung nach Anspruch 5, **dadurch gekennzeichnet,** daß der Wegdetektor als induktiver Näherungsschalter (12) ausgebildet ist.

## FIG 1a

## FIG 1b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 749 603 (INDUSTRIE-WERKE KARLSRUHE AUGSBURG AG) * Seite 6, Zeile 5 - Seite 7, Zeile 4; Figur * | 1,2. | B 25 J 19/06 |
| Y | --- | 3 | |
| Y | DE-A-2 717 871 (VOLKSWAGENWERKE AG) * Ansprüche 1,2; Seite 4, Zeilen 8-26 * --- | 3 | |
| A | EP-A-0 133 981 (SIEMENS AG) * Seite 4, Zeilen 2-6 * ----- | 5 | |

**RECHERCHIERTE SACHGEBIETE (Int. Cl.4)**

B 25 J

Der vorliegende Recherchenbericht wurde für alle Patentansprüche erstellt

| Recherchenort | Abschlußdatum der Recherche | Prüfer |
|---|---|---|
| DEN HAAG | 09-03-1988 | LAMMINEUR P.C.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)